# EUROPEAN PATENT APPLICATION

(11) **EP 2 130 890 A1**
(43) Date of publication of application: **09.12.2009**
(21) Application number: 09161906.4
(22) Date of filing: 04.06.2009
(51) Int. Cl.: C09J 7/02

(54) **Protective multi-layer**

(30) Priority: 04.06.2008 IT MI20081020
(71) Applicant: Camilla Engineering Limited, 4 Dublin (IE)
(72) Inventor: Hulme, Douglas James Morley, 4, Dublin (IE)
(74) Representative: Perani, Aurelio

(57) **Abstract**

The present invention concerns a multilayer protective product, and the protective film formed thereof, comprising a first film-forming polymeric layer and a second layer designed to define the outer layer of the multilayer product, said first film-forming polymeric layer comprising 14 to 95% w/w of a polymer containing ester units and said first film-forming polymeric layer having a reversible adhesion capacity from 0.01 N/cm to 8 N/cm. Such multilayer product affords reversible adhesion capacity and highly stable adhesion to the surface of the object to be protected, and may be manufactured at low cost and with a high throughput, as well as in a highly convenient and environmentally friendly manner.

## Description

The present invention relates to a multilayer protective product as defined in the preamble of claim 1.

Multilayer protective products, namely protective films, are used to protect object surfaces from weather, dirt and/or damages during usual handling, storage, transport and, possibly, installation after manufacture.

The surfaces on which the protective films are to be applied may be of very different nature. Thus, for instance, according to specific needs, these protective films may be required to be applied, without limitation, to: metals, painted metals, glasses, mirrors, plastic and wood, as well as carpets or other fiber-based materials, fabric or nonwoven fabric.

Protective films obviously have different characteristics according to their particular use. This particularly relates to: type of material, protective film thickness and protective film adhesion.

With regard to the material that forms current protective films, it is noted that these films are generally made of made of polyethylene and derivatives thereof or PVC (polyvinyl chloride), but also of the following materials: homopolymers and copolymers of polypropylene, polyester, nylon and derivatives thereof. It is needless to say that a major role in the selection of the protective film material is played by the cost and the chemical and physical properties of the material, in view of reducing the overall manufacturing costs of the objects to be protected.

Both the thickness and the adhesive power of the protective film will depend on its particular application, mainly on the nature and roughness of the surface on which the protective film is to be applied.

In the prior art, the adhesive power of the protective film is obtained by coating or spraying one side of the protective film with adhesives and glues, after the film manufacturing process.

Namely, a roll of protective film is unwound to coat or spray one side of the film with a sufficient amount of adhesive or glue so as to reach the required adhesive power. Then, the film is rewound into the roll and cut to size (width and length), if needed.

As compared with currently available protective films, it shall be noted that the above mentioned coating or spraying step, which occurs in a special processing step after film making and in a dedicated line, may involve problems of adhesive release on the product to be protected upon removal of the protective film under extreme moisture and mechanical stress conditions, as well as an increase of the overall film costs.

The present invention is based on the problem of providing a protective material as set out above, which has such structural and functional characteristics as to allow simple and quick manufacture at low cost, while obviating the above mentioned prior art drawbacks.

This problem has been solved by the provision of a multilayer product as defined in claim 1.

Further features and advantages of the multilayer product of the invention will appear from the following detailed description of some embodiments thereof, which are given by way of illustration and without limitation.

The multilayer product of the present invention comprises:
- a first film-forming polymeric layer, defining a first side of said multilayer product and
- a second layer defining a second side of said multilayer product, which adheres and is opposite to the former, said second side of the multilayer product being designed to define the outer side of the multilayer product,
   said first film-forming polymeric layer comprising 14 to 95% w/w of a polymer containing ester units, based on the weight of said first film-forming polymeric layer, the remaining part being a film-forming polymeric matrix, and
   said first film-forming polymeric layer having a reversible adhesion capacity of 0,01 N/cm to 8 N/cm.
   As used herein, the term "adhesion" shall be intended to be expressed as force per unit width (N/cm). It is measured by a test that consists in pulling a film applied on a standard surface (made of steel) at 180° at a speed of 300 mm/min. Such value is preferably measured according to UNI EN 1939:2004 or any revision thereof.

Particularly, the first side of the multilayer product is the side designed to adhere against the surface of the object to be protected, whereas the second side of the multilayer product is opposite to and adheres against the former, and is designed to define the outer side of the multilayer product, when the latter is applied to the surface of the object to be protected.

Namely, the multilayer product of the present invention can adhere against said surface to be protected by the first film-forming polymeric layer, which comprises an adequate amount of a polymer containing ester units in a film-forming polymeric matrix. In the prior art, the adhesive is typically applied by spraying or coating, in an additional step following the step of film-forming of the layer/s that will support it. This is because an adhesive is not a film-forming material and, therefore, is not coextrudable as such. Instead, the multilayer product of the invention advantageously incorporates the polymer containing ester units in a suitable polymeric matrix which allows film-forming and hence coextrusion, with the advantage of not affecting the adhesive properties of the polymer containing ester units, i.e. its adhesion value, and its reversibility properties of adhesion to the surface of the objects to be protected. Furthermore, this will also obviate the prior art drawbacks associated with unevenness of the polymer containing ester units in contact with the surface of the objects, caused by spraying and coating, which do not ensure uniform and even distribution of the adhesive, whereas the multilayer product of the invention ensures evenness and uniformity throughout the first film-forming polymeric layer designed to adhere against the objects.

It should be noted that, with less than 14% w/w containing polymer ester units, the multilayer product would not be suitable for the purposes of the present invention, because it would not provide sufficient and stable adhesive capacity in contact with the object to be protected. With more than 95% w/w polymer containing ester units, the first layer might be hardly formed into a film, due to the reduced amount of film-forming polymeric matrix.

Moreover, the multilayer product of the invention also has a reversible adhesion capacity of 0.01 to 8 N/cm, which allows the multilayer product to provide both adequate object protection, due to its stable adhesion, and the possibility of reusing the multilayer product several times, as the adhesive capacity of the multilayer product is advantageously maintained even upon removal from the surface of the object to be protected. Also, once the multilayer product is removed, it leaves no undesired trace and/or residue of material on the surface against which it adhered. It should be noted that, with less than 0.01 N/cm, the multilayer product does not provide sufficient adhesion to the surface to be protected and that, with more than 8 N/cm, excessive adhesion occurs, which involves difficulties in the removal of the multilayer product for the purposes of the present invention.

Therefore, a multilayer product could be obtained, which advantageously and conveniently already comprises an appropriate amount of polymer containing ester units, i.e. 14 to 95% w/w based on the weight of the layer that contains it, thereby avoiding the need for a special adhesive layer, e.g. sprayed or coated, as required in the prior art. Therefore, in addition to the convenient omission of a preparation step, as more clearly explained hereafter, a product could be obtained which reversibly adheres against the object to be protected, leaves no residue and also ensures stable protection of the surfaces against which it is adhered.

Preferably, the first layer of the multilayer product of the invention has an adhesion capacity of 0.1 N/cm to 4 N/cm. This range of values has been found to provide an improved balance between adhesion force and adhesion reversibility. More preferably, said first layer has an adhesion capacity of 0.1 N/cm to 2.5 N/cm. This range of values has been found to provide the best balance between adhesion force, reversibility and absence of residues upon removal from the surface to be protected.

Particularly, when the multilayer product is adhered to the following substrates, the following adhesion force ranges are found (by a known method of analysis):

| | |
|---|---|
| painted metals | 0.1 - 2.5 N/cm |
| metals | 0.15 - 2.5 N/cm |
| glasses/mirrors | 0.01 - 2.5 N/cm |
| carpets | 0.5 - 8 N/cm |
| wood | 0.2 - 2.5 N/cm |
| plastic | 0.01 - 4 N/cm. |

In a preferred embodiment, the first film-forming polymeric layer comprises 30 to 80% w/w of a polymer containing ester units, based on the weight of said first film-forming polymeric layer. These amounts ensure the above advantageous characteristics of the first layer, without affecting the good film-forming behavior of the matrix in which the polymer containing ester units is incorporated. Preferably, the first film-forming polymeric layer comprises 40 to 70% w/w of a polymer containing ester units, based on the weight of said first film-forming polymeric layer. More preferably, the first film-forming polymeric layer comprises 45 to 65% w/w of a polymer containing ester units, based on the weight of said first film-forming polymeric layer.

In a preferred embodiment of the present invention, the polymer containing ester units is a vinyl ester copolymer. Preferably, said vinyl ester copolymer is a vinyl-acetate copolymer. More preferably, said copolymer is an olefin-vinyl ester copolymer.

In a second preferred embodiment of the present invention, the polymer containing ester units is an acrylate copolymer. Preferably, said acrylate copolymer is a natural rubber. Otherwise, said acrylate copolymer is a butyl acrylate or a hexyl acrylate.

As shown by the following examples, these adhesive agents have been found to be particularly advantageous for the purposes of the present invention, because their presence in appropriate amounts in the film-forming polymeric matrix imparts adequate reversible adhesion to the final multilayer product and adequate protection of the object to be protected, without affecting the film-forming properties of the matrix.

The film-forming polymeric matrix comprises polyethylene, polypropylene, polyesters, polyvinyl chloride, polyamides, and homopolymers, copolymers and derivatives thereof, alone or in combinations or mixtures. The selection of the material for the film-forming polymeric matrix typically depends on the material for the second layer of the multilayer product, against which the first layer shall adhere. In order to ensure mutual adhesion, these layers are required to be compatible or capable of being compatible, to prevent any delamination of the multilayer product during use, or even before, during preparation, e.g. in its roll, due to loosening or detachment of the component layers.

Suitable materials for the second layer of the multilayer product, which forms the outer layer when the multilayer product is adhered to the surface to be protected, include polyolefins, polyesters, polyvinyl chloride, polyamides, and homopolymers, copolymers and derivatives thereof, alone or in various combinations or mixtures.

The material of the second layer of the multilayer product is selected according to the type of surface to be protected, i.e. its chemical and physical nature and its geometry.

According to another embodiment of the present invention, the multilayer product further comprises at least one third layer interposed between said first film-forming polymeric layer and said second layer. Said at least one third layer comprises a film-forming polymeric matrix, which may be either the same as or different from that of the first film-forming polymeric layer, and a polymer containing ester units which may be equal or technically equivalent to the polymer containing ester units of said first film-forming polymeric layer, in an amount of 0.1% to 30% w/w based on the weight of said at least one third film-forming polymeric layer. Such at least one third layer improves compatibility between the first and the second layers, due to the polymer containing ester units incorporated therein. Improved cohesion is thus obtained between the layers of the multilayer product, which is particularly advantageous if the surfaces to be protected are irregular or when the multilayer product is exposed to long-lasting and/or less than optimal conditions of use or storage.

Preferably, the percentage by weight of polymer containing ester units in said at least one third layer is lower than that of the polymer containing ester units in said first film-forming polymeric layer. The improved cohesion effect is higher when the polymer containing ester units is provided in a smaller amount than that of the first layer.

According to another embodiment of the present invention, a plurality of film-forming polymeric layers are provided between said first film-forming polymeric layer and said second layer, wherein the percentage by weight of polymer containing ester units in each of them decreases from said first film-forming polymeric layer to said second layer. Each additional layer comprises a film-forming polymeric matrix, which may be either the same as or different from that of the first film-forming polymeric layer, and a polymer containing ester units which may be equal or technically equivalent to the polymer containing ester units of said first film-forming polymeric layer. This will provide maximized and optimized layer compatibility.

According to a further embodiment of the present invention, a plurality of film-forming polymeric layers are provided between said first film-forming polymeric layer and said second layer, wherein the percentage by weight of polymer containing ester units in each of them is equal to or lower than that of the first layer.

Optionally, the adhesive capacity of the first film-forming polymeric layer may be increased by an activating treatment of the outer surface designed for adhesion to the object to be protected. Such activating treatment may be, for example, a corona treatment, i.e. immersion in a high voltage field at normal pressure and simultaneous bombardment with high energy charged ions; or UV irradiation in case of non polar surfaces (comprising polyolefins); or low pressure plasma activation, which improves corona treatment effectiveness and duration, although it involves higher costs.

Optionally, one or more layers of the multilayer product of the invention may advantageously contain additives as required by each particular use, such as flame-retardant agents, antioxidant agents, fillers, anti-yellowing agents, pigments, antistatic agents, lubricants, foaming agents, anti-UV agents, electrically conductive agents, process adjuvants, slip agents, anti-blocking agents, release agents, antimicrobial agents, elastomer materials, alone or in various combinations or mixtures.

In another aspect, the invention concerns a process for making a multilayer product comprising:
- a first film-forming polymeric layer as defined in any one of claims from 1 to 17, which defines a first side of said multilayer product and
- a second layer defining a second side of said multilayer product, said second side of the multilayer product adhering and being opposite to said first side of the multilayer product and being designed to define the outer side of the multilayer product, said process comprising the steps of
   a) forming said first film-forming polymeric layer into a film;
   b) providing said second layer of the multilayer product; and
   c) thermally bonding such layers together.

As illustrated above in the description of the multilayer product of the invention, the provision of a layer that incorporates a polymer containing ester units avoids the adhesive application step after film-forming, which step was carried out in the prior art by spraying or coating. The omission of the adhesive application step affords improvements both in terms of costs and times for the manufacture of the multilayer product, and in terms of environment protection and soundness, due to the dramatic reduction of solvent emissions, as compared with the use of an organic solvent-based adhesive, which requires collection and disposal of solvents during drying.

The process of the invention may further include a step d), in which at least one third film-forming polymeric layer, having the characteristics as disclosed above in the description of the multilayer product, is formed into a film. This at least one third layer may be also formed like the first layer of step a).

In one embodiment, the step d) of the process may include the formation of a plurality of films having the characteristics as disclosed above in the description of the multilayer product.

Then, the resulting multilayer may be conveniently wound into rolls having the required width and length; such winding may be of contact, axial or combined type. Any material rejected during the trimming and roll winding step, if any, may be ground and reused as a third or additional layer, as a derivative from both the first and second layer and having a lower percentage of polymer containing ester units. Therefore, the process of the invention also advantageously and conveniently allows scrap recycling, which further improves the above mentioned features of environment soundness and cost effectiveness.

In a preferred embodiment of the process of the invention, all the steps are carried out at the same time with a blown or cast film manufacturing method. Thus, the process of the invention is advantageously quick and cost effective, as all the steps are simultaneously carried out in the same system which, unlike the prior art, requires no means for later adhesive spraying or coating.

According to another embodiment, the process steps are carried out by sizing or calendering.

In another aspect, the present invention concerns a protective film comprising a multilayer product as disclosed above. As used herein, the term "film" is intended to indicate a film material comprising the multilayer product of the invention and one or more additional layers of material opposite to the layer designed for adhesion with the surface to be protected, wherein the overall thickness is lower than one millimeter (mm). Preferably, such overall thickness varies from 15 to 200 micrometers (µm).

In yet another aspect, the present invention concerns the use of a film-forming polymeric material comprising 14 to 95% w/w of a vinyl ester or acrylate copolymer, the rest being a film-forming polymeric matrix, as a reversible adhesive having a reversible adhesion capacity of 0.01 N/cm to 8 N/cm.

Obviously, all the above advantageous and preferred aspects concerning the multilayer product of the invention are the same as those recognized for the preparation process, and for the use of the film-forming polymeric material as a reversible adhesive.

Some examples of the multilayer product of the invention will be described below without limitation. Unless otherwise stated, all the amounts are intended to be expressed as % w/w.

### Example 1

### Preparation of a multilayer product of the invention

A first film-forming polymeric layer was provided, which included 65% w/w EVA (ethylene vinyl acetate), the rest being a polyethylene matrix.

The second layer, i.e. the one designed to define the outer layer of the final multilayer product, was substantially made of LDPE (low density polyethylene).

The multilayer product of the invention, comprising such two layers, was extruded with a blown film manufacturing method.

The resulting multilayer product was wound into 1000 m × 1005 mm rolls (length × width).

### Example 2

### Preparation of a multilayer product of the invention

A first film-forming polymeric layer was provided, which included 45% w/w EVA (ethylene vinyl acetate), the rest being a polyethylene matrix.

The second layer, i.e. the one designed to define the outer layer of the final multilayer product, was made of LDPE (low density polyethylene).

The third layer, interposed between the two previous layers, was a film-forming polymeric layer including 19% w/w EVA (ethylene vinyl acetate), the rest being a LDPE matrix.

The multilayer product of the invention, comprising such three layers, was extruded with a blown film manufacturing method.

The resulting multilayer product was wound into 1000 m × 1005 mm rolls (length × width).

### Examples 3-5

### Application of the multilayer product of the invention

In the following examples, the multilayer product of the invention resulting from Example 2 was applied on various materials, which are listed in Table 1 along with the reversible adhesion values obtained for each example.

**Table 1**

| Example | Material to be protected | Adhesion (N/cm) |
|---|---|---|
| 3 | Metals | 0.5 |
| 4 | Glasses/mirrors | 0.6 |
| 5 | Plastic | 0.3 |

With these adhesion levels, the multilayer product of the invention was found to afford high reversibility. This means that the multilayer product may be applied and removed several times to and from the surfaces as listed in Table 1.

No residues were found on the surfaces upon first removal, and upon further removals after a few months.

Furthermore, for long application periods under a variety of environmental conditions (temperature, humidity), no blistering, local peeling and alteration of the adhesion capacity various times after removal from the object surface were found.

### Example 6

### Preparation of a multilayer product of the invention

A first film-forming polymeric layer was provided, which included 25% w/w butyl acrylate, the rest being a polyethylene matrix.

The second layer, i.e. the one designed to define the outer layer of the final multilayer product, was made of LDPE (low density polyethylene).

The third layer, interposed between the two previous layers, was a film-forming polymeric layer including 8% w/w EVA (ethylene vinyl acetate), the rest being a LDPE matrix.

The multilayer product of the invention, comprising such three layers, was coextruded with a blown film manufacturing method.

The resulting multilayer product was wound into 1000 m × 1,250 mm rolls (length × width).

### Examples 7-10

### Application of the multilayer product of the invention

In the following examples, the multilayer product of the invention resulting from Example 6 was applied on various materials, which are listed in Table 2 along with the reversible adhesion values obtained for each example.

**Table 2**

| Example | Material to be protected | Adhesion (N/cm) |
|---|---|---|
| 7 | Painted metals | 0.85 |
| 8 | Metals | 0.98 |
| 9 | Glasses/mirrors | 1.23 |
| 10 | Plastic | 1.10 |

With these adhesion levels, the multilayer product of the invention was once more found to afford high reversibility. This means that the multilayer product may be applied and removed several times to and from the surfaces as listed in Table 2.

No residues were found on the surfaces both upon first removal and upon further removals after a few months.

Furthermore, after long application periods under a variety of environmental conditions (temperature, humidity) and upon subsequent removals from the object surface no blistering, local peeling or alteration were observed.

As clearly shown in the above description, the multilayer product of the present invention not only obviates the prior art drawbacks as set out in the introduction of this disclosure, but also affords surprising advantages in terms of both the manufacturing process and the characteristics of the multilayer product.

Those skilled in the art will obviously appreciate that a number of changes and variants may be made to the multilayer product as described hereinbefore, without departing from the scope of the invention, as defined in the annexed claims.

## Claims

1. A multilayer product comprising:
- a first film-forming polymeric layer, defining a first side of said multilayer product and
- a second layer defining a second side of said multilayer product, which adheres and is opposite to the first layer, said second side of the multilayer product being designed to define the outer side of the multilayer product,
said first film-forming polymeric layer comprising 14 to 95% w/w of a polymer containing ester units, based on the weight of said first film-forming polymeric layer, the remaining part being a film-forming polymeric matrix, and
said first film-forming polymeric layer having a reversible adhesion capacity of 0,01 N/cm to 8 N/cm.

2. A multilayer product as claimed in claim 1, wherein said first layer has an adhesion capacity of 0.1 N/cm to 4 N/cm.

3. A multilayer product as claimed in claim 2, wherein said first layer has an adhesion capacity of 0.1 N/cm to 2.5 N/cm.

4. A multilayer product as claimed in any one of claims from 1 to 3, wherein said first film-forming polymeric layer comprises 30 to 80% w/w of a polymer which contains ester units, based on the weight of said first film-forming polymeric layer.

5. A multilayer product as claimed in claim 4, wherein said first film-forming polymeric layer comprises 40 to 70% w/w of a polymer containing ester units, based on the weight of said first film-forming polymeric layer.

6. A multilayer product as claimed in claim 5, wherein said first film-forming polymeric layer comprises 45 to 65% w/w of a polymer containing ester units, based on the weight of said first film-forming polymeric layer.

7. A multilayer product as claimed in any preceding claim from 1 to 6, wherein the polymer containing ester units is a vinyl ester copolymer.

8. A multilayer product as claimed in claim 7, wherein said vinyl ester copolymer is a vinyl-acetate copolymer.

9. A multilayer product as claimed in claim 7 or 8, wherein said copolymer is an olefin-vinyl ester copolymer.

10. A multilayer product as claimed in any preceding claim from 1 to 6, wherein said polymer containing ester units is an acrylate copolymer.

11. A multilayer product as claimed in claim 10, wherein said acrylate copolymer is a natural rubber.

12. A multilayer product as claimed in claim 10, wherein said acrylate copolymer is a butyl acrylate or a hexyl acrylate.

13. A multilayer product as claimed in any one of claims from 1 to 12, wherein the film-forming polymeric matrix of said first layer comprises polyethylene, polypropylene, polyester, polyvinyl chloride, polyamide, and homopolymers, copolymers and derivatives thereof, alone or in combinations or mixtures.

14. A multilayer product as claimed in any one of claims from 1 to 13, wherein the second layer of the multilayer product comprises polyolefins, polyesters, polyvinyl chloride, polyamides, and homopolymers, copolymers and derivatives thereof, alone or in combinations or mixtures thereof.

15. A multilayer product as claimed in any one of claims from 1 to 14, further comprising at least one third layer between said first film-forming polymeric layer and said second layer, said at least one third layer comprising a film-forming polymeric matrix, which may be either the same as or different from that of the first film-forming polymeric layer, and a polymer containing ester units, which may be equal or technically equivalent to the polymer containing ester units of said first film-forming polymeric layer, in an amount of 0.1% to 30% w/w based on the weight of said at least one third film-forming polymeric layer.

16. A multilayer product as claimed in claim 15, wherein the percentage by weight of polymer that contains ester units in said at least one third layer is lower than that of the polymer that contains ester units in said first film-forming polymeric layer.

17. A multilayer product as claimed in claim 15 or 16, wherein, if a plurality of film-forming polymeric layers are provided between said first film-forming polymeric layer and said second layer, the percentage by weight of polymer that contains ester units in each of them decreases from said first film-forming polymeric layer to said second layer.

18. A multilayer product as claimed in claim 15 or 16, wherein, if a plurality of film-forming polymeric layers are provided between said first film-forming polymeric layer and said second layer, the percentage by weight of polymer that contains ester units in each of them is equal to or lower than that of the first layer.

19. A multilayer product as claimed in any one of claims from 1 to 18, wherein the one or more layers of the multilayer product contain additives, such as flame-retardant agents, antioxidant agents, fillers, anti-yellowing agents, pigments, antistatic agents, lubricants, foaming agents, anti-UV agents, electrically conductive agents, process adjuvants, slip agents, anti-blocking agents, release agents, antimicrobial agents, elastomer materials, alone or in combinations or mixtures thereof.

20. Process of making a multilayer product comprising:
- a first film-forming polymeric layer as claimed in any one of claims from 1 to 19, which defines a first side of said multilayer product and
- a second layer defining a second side of said multilayer product, said second side of the multilayer product adhering and being opposite to said first side of the multilayer product and being designed to define the outer side of the multilayer product,
said process comprising the steps of
a) forming said first film-forming polymeric layer into a film;
b) providing said second layer of the multilayer product; and
c) thermally bonding such layers together.

21. A process as claimed in claim 20, further including a step d), in which at least one third film-forming polymeric layer as claimed in any one of claims from 15 to 19 into a film.

22. A process as claimed in claim 20, wherein the step d) of the process may include the formation of a plurality of films as claimed in any one of claims from 15 to 19.

23. A process as claimed in any one of claims from 20 to 22, wherein all the steps are carried out at the same time with a blown or cast film manufacturing method.

24. A process as claimed in any one of claims from 20 to 22, wherein the steps are carried out by sizing or calendering.

25. A process as claimed in any one of claims from 20 to 24, further comprising a step e) of activating treatment on the outer surface of said first layer.

26. A protective film comprising the multilayer product as claimed in any one of claims from 1 to 19.

27. Use of a film-forming polymeric material comprising 14 to 95% w/w of a vinyl ester or acrylate copolymer, the rest being a film-forming polymeric matrix, as a reversible adhesive having a reversible adhesion capacity of 0.01 N/cm to 8 N/cm.
